(19) **Europäisches Patentamt**

**European Patent Office**

**Office européen des brevets**

(11) **EP 0 870 416 B1**

(12) **EUROPÄISCHE PATENTSCHRIFT**

(45) Veröffentlichungstag und Bekanntmachung des Hinweises auf die Patenterteilung:
**23.04.2003 Patentblatt 2003/17**

(51) Int Cl.7: **H04Q 11/04**

(21) Anmeldenummer: **96946039.3**

(22) Anmeldetag: **04.12.1996**

(86) Internationale Anmeldenummer:
**PCT/DE96/02320**

(87) Internationale Veröffentlichungsnummer:
**WO 97/024902 (10.07.1997 Gazette 1997/30)**

(54) **VERFAHREN ZUR PRIORISIERUNG VON ZELLENSTRÖMEN IN SYSTEMEN, DIE INFORMATIONEN NACH EINEM ASYNCHRONEN TRANSFERMODUS (ATM) ÜBERTRAGEN**

PROCESS FOR PRIORITISING OF CELL STREAMS IN SYSTEMS WHICH TRANSMIT DATA IN AN ASYNCHRONOUS MODE (ATM)

PROCEDE DE CLASSEMENT PAR ORDRE DE PRIORITE POUR DES COURANTS DE CELLULES DANS DES SYSTEMES TRANSMETTANT DES DONNEES SELON UN MODE DE TRANSFERT ASYNCHRONE (ATM)

(84) Benannte Vertragsstaaten:
**AT BE CH DE DK ES FI FR GB IT LI NL SE**

(30) Priorität: **28.12.1995 DE 19548985**

(43) Veröffentlichungstag der Anmeldung:
**14.10.1998 Patentblatt 1998/42**

(73) Patentinhaber: **SIEMENS AKTIENGESELLSCHAFT**
**80333 München (DE)**

(72) Erfinder: **BRIEM, Uwe**
**D-82216 Maisach (DE)**

(56) Entgegenhaltungen:
**EP-A- 0 603 916          EP-A- 0 681 385**

- **IEICE TRANSACTIONS ON COMMUNICATIONS, Bd. E75 - B, Nr. 9, 1.September 1992, Seiten 894-904, XP000321325 CHANGHWAN OH ET AL: "PRIORITY CONTROL ATM FOR SWITCHING SYSTEMS"**

**Beschreibung**

Die Erfindung betrifft ein Verfahren gemäß dem Oberbegriff des Patentanspruchs 1.

Bei zeitgemäßen ATM-Systemen werden Informationen in Zellen übertragen. Diese weisen einen Kopfteil sowie einen Informationsteil auf. Im Kopfteil sind die Verbindungsinformationen und im Informationsteil die zu übertragenden Nutzdaten abgespeichert. Die eigentliche Übertragung erfolgt in der Regel über Verbindungsabschnitte zwischen Sender und Empfänger. Dabei besteht gegebenenfalls das Erfordernis, die Verbindungsabschnitte derart auszunutzen, daß eine Mehrzahl von Sendeeinrichtungen die von diesen ausgehenden Zellenströme über denselben Verbindungsabschnitt übertragen.

Um die Übertragung der jeweiligen Zellenströme entsprechend den Erfordernissen der einzelnen Zellenströme durchführen zu können, hat sich beim Stand der Technik ein sogenanntes WEIGH-TED FAIR QUEUEING SCHEDULING - Verfahren durchgesetzt. Die entsprechenden Verhältnisse sind beispielsweise in der Druckschrift "Virtual Spacing for Flexible Traffic Control", J.W. Roberts, International Journal of Communication Systems, Vol. 7, 307-318 (1994) aufgezeigt. Dabei werden den einzelnen Zellenströmen unterschiedliche Gewichtungsfaktoren zugewiesen, mit denen der eigentliche Übertragungsvorgang auf den einzelnen Verbindungsabschnitten gesteuert wird. Zum besseren Verständnis sei auf Figur 3 verwiesen.

Dort sind beispielhaft Zellenströme 1 ... n offenbart. Die n Zellenströme werden von einer Sendeeinrichtung DEMUX in Richtung eines oder mehrerer Empfänger geleitet. In der Praxis wird dabei lediglich ein gemeinsamer Verbindungsabschnitt benutzt. Den n Zellenströmen sind weiterhin Gewichtungsfaktoren $r_1 ... r_n$ zugewiesen. Zum einfachen Verständnis sei angenommen, daß lediglich zwei Zellenströme, nämlich die Zellenströme 1, 2 über ein Verbindungsabschnitt geführt werden sollen. Der Verbindungsabschnitt soll weiterhin eine maximale Übertragungskapazität von 150 Mbit/sec aufweisen. Beiden Zellenströmen 1 und 2 sind Gewichtungen $r_1 = 2$ sowie $r_2 = 1$ zugewiesen. Damit wird erreicht, daß Zellenstrom 1 mit einer Übertragungsrate von 100 Mbit/sec und Zellenstrom 2 mit lediglich 50 Mbit/sec übertragen wird, falls Zellen zur Übertragung anstehen.

Problematisch an einer derartigen Vorgehensweise ist, daß die Auslastung der Verbindung insbesondere im Hinblick auf unterschiedliche Dienste nicht optimal gewährleistet ist. Dies liegt insbesondere daran, daß beispielsweise Verbindungen mit garantierter Dienstgüte anders behandelt werden müssen als zum Beispiel Verbindungen ohne jegliche Dienstgütegarantien. So müssen erstere in der Regel in Abhängigkeit der Dienstgüte- und/oder Verbindungsparameter durchgeschaltet werden, ein Umstand, der bei letzteren weniger von Bedeutung ist. Hier werden die benötigten Daten nur übertragen, wenn der Verbindungsabschnitt sonst wenig belastet ist. Dies ist insbesondere dann der Fall, wenn die Zellenströme mit garantierter Dienstgüte die zur Verfügung stehende Übertragungskapazitäten nicht voll ausnutzen.

Aus der Druckschrift 'IEICE Transactions on Communications '92, Changhwan OH et al: Priority Control ATM for Switching Systems' ist ein Verfahren zur Priorisierung von zu übertragenden Zellenströmen bekannt. Demgemäß werden die Zellen der Ströme aufgrund ihrer QOS (Quality of Service) in Klassen eingeteilt. Eine Prioritätslogik entscheidet dann, welche Zellen aus einem Buffer auszulesen sind. Wie allerdings eine Priorisierung durch Zuweisen von Gewichtungsfaktoren zu steuern ist, ist dieser Druckschrift nicht entnehmbar.

Weiterhin ist der europäischen Patentanmeldung EP-A-0 681 385 A2 ebenfalls ein Verfahren zur Priorisierung von Zellenströmen bekannt. Hier wird eine Priorisierung ebenfalls durch eine Prioritätslogik vorgenommen, indem Zellen in Warteschlangen (Queues) eingeschrieben werden und nach Maßgabe von Qualitätskriterien (Delay Quality Classes) durch die Prioritätslogik wieder ausgelesen werden. Wie allerdings eine Priorisierung durch Zuweisen von Gewichtungsfaktoren zu steuern ist, ist auch dieser Druckschrift nicht entnehmbar.

Der Erfindung liegt die Aufgabe zugrunde, einen Weg aufzuzeigen, wie die Auslastung von Verbindungsabschnitten optimal und effizient gesteuert werden kann.

Die Erfindung wird ausgehend von den im Oberbegriff des Patentanspruch 1 angegebenen Merkmalen durch die Merkmale des kennzeichnenden Teiles gelöst.

Vorteilhaft an der Erfindung ist insbesondere, daß durch eine Auswahl extremer Werte der Gewichtungsfaktoren eine Priorisierung erreicht wird. Damit ist der Vorteil verbunden, daß in Abhängigkeit dieser Prioritäten die Zellenströme über den betreffenden Verhindungsabschnitt gesteuert werden können und damit eine optimale Auslastung sichergestellt ist.

Weitere Ausgestaltungen der Erfindung sind in den Unteransprüchen angegeben:

Gemäß Anspruch 2 ist vorgesehen, daß die Zellenströme aus einer Vielzahl von Teilströmen gebildet sind, denen jeweils gegebenenfalls unterschiedliche Gewichtungsfaktoren zugewiesen sind. Damit ist der Vorteil verbunden, daß die Übertragung von Informationen innerhalb eines Verbindungsabschnittes mit unterschiedlichen Prioritäten durchgeführt werden kann.

Gemäß Anspruch 3 ist vorgesehen, daß den Teilströmen eines Zellenstromes gegebenenfalls unterschiedliche Gewichtungsfaktoren zugewiesen werden. Damit ist der Vorteil einer Priorisierung von Informationen innerhalb eines Zellenstromes verbunden.

Gemäß Anspruch 4 ist vorgesehen, daß wenigstens eine Zählvorrichtung pro Teilstrom und Priorität vorgesehen wird, deren Zählerstand beim Eintreffen einer Zelle desjeweiligen Teilstromes inkrementiert und beim Verlassen dekrementiert wird. Damit ist der Vorteil verbunden, daß der Füllgrad mit Zellen im System erfaßbar ist.

Gemäß Anspruch 5 ist vorgesehen, daß ein Scheduler die Zellen nach Maßgabe der Auswertung der Zählvorrichtungen weiterleitet. Damit ist der Vorteil einer besonders effizienten Nutzung des Verbindungsabschnittes verbunden.

Die Erfindung wird im folgenden anhand eines Ausführungsbeispiels näher erläutert.

Es zeigen:

Figur 1    das erfindungsgemäße Verfahren allgemeiner Art,

Figur 2    eine spezielle Ausführungsform des erfindungsgemäßen Verfahrens,

Figur 3    den Stand der Technik, von dem die Erfindung ausgeht.

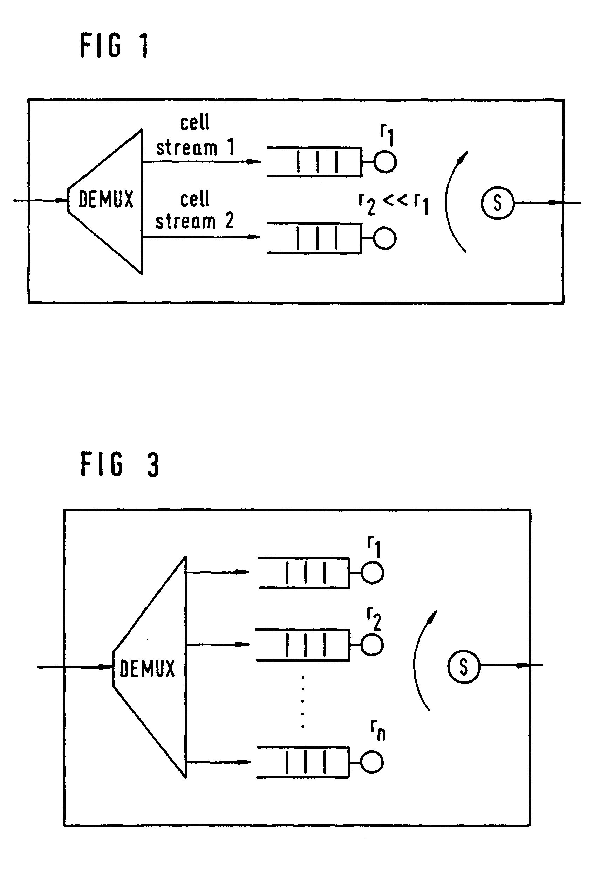

In Fig.1 ist das erfindungsgemäße Verfahren anhand eines allgemeinen Ausführungsbeispiels näher erläutert. Dabei wird ein Zellenstrom i vor dem Übertragungsvorgang mit einem Gewichtungsfaktor $r_i$ versehen. Gemäß Fig. 1 sind zwei Zellenströme, nämlich Zellenstrom 1 und Zellenstrom 2 aufgezeigt. Sie werden ausgehend von einer Sendereinrichtung DEMUX, die in der Regel als Demultiplexer ausgebildet ist, über einen gemeinsamen Verbindungsabschnitt zu einer oder mehreren Empfangseinrichtungen hin übertragen. Dabei wird einem der Zellenströme, also z.B. Zellenstrom 1, ein Gewichtungsfaktor $r_1$ zugewiesen, während dem verbleibenden Zellenstrom, nämlich Zellenstrom 2 ein Gewichtungsfaktor $r_2$ zugewiesen wird. Um einer der beiden Zellenströmen nun bezüglich der Übertragung priorisieren zu können, wird einer der Gewichtungsfaktoren, zum Beispiel $r_2$ sehr viel kleiner gewählt als der verbleibende Gewichtungsfaktor $r_1$. Sehr viel kleiner soll dabei bedeuten, daß der Quotient aus $r_1$ und $r_2$ sehr viel größer als 1 ist. Für praktische Überlegungen hat sich ein Faktor 100 als durchaus akzeptabel erwiesen.

In der Praxis treten jedoch eine Vielzahl von Zellenströmen auf, die es über einen gemeinsamen Verbindungsabschnitt zu übertragen gilt. Für die weiteren Überlegungen sei angenommen, daß diese Vielzahl der Zellenströme n sei. Weiterhin sei angenommen,daß Zellenströme mit lediglich 2 Prioritäten übertragen werden sollen. Es wird also lediglich zwischen einer hohen Priorität und einer niedrigen Priorität unterschieden.

In diesem Fall werden allen hochpriorisierten Zellenströmen derselbe Gewichtungsfaktor $r_i$ zugewiesen, während allen nieder priorisierten derselbe Gewichtungsfakror $r_j$ zugewiesen wird. Beispielhaft sei angenommen, daß die Anzahl der hochpriorisierten Zellenströme $n_h$ sei. Für die hochpriorisierten Zellenströme

gilt also $1 \leq i \leq nh$. Weiterhin sei die Anzahl aller niedrigpriorisierten Zellentsröme $n_1$. Dabei gilt, daß $n_h + 1 \leq j \leq n_h + n_1$. Weiterhin werden erfindungsgemäß die Gewichtungsfaktoren der niedriger priorisierten Zellenströme durch einen Faktor C1 dividiert, was letztendlich bedeutet, daß gilt

$$(r_j \, /C1)^*C2 < r_i \qquad \text{für alle i, j}$$

Der konstante Faktor C2 sollte dabei sehr viel größer als 1 sein. Auch hier hat sich bei praktischen Überlegungen eine Größenordnung von 100 durchgesetzt.

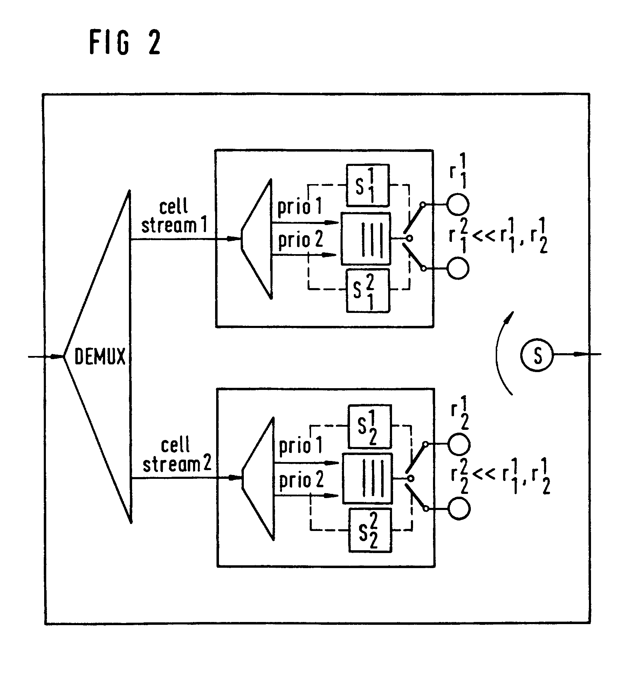

In Figur 2 ist eine weitere Ausgestaltung der Erfindung dargestellt:

Hier wird davon ausgegangen,daß ein Zellenstrom mehrere Teilströme mit jeweils unterschiedlicher Priorität aufweist. Diese Teilströme können jedoch aus dem Hauptstrom nicht ohne weiteres abgeleitet werden, da dies bei ATM-Zellen gegebenenfalls zu Nachrichtenüberholungen führt. Allerdings können die sich in ihrer Priorität unterscheidenden Teilströme nach dem eben vorgestellten Prinzip priorisiert werden, indem die Anzahl der hochpriorisierten und niederpriorisierten Zellen eines jeden Zellenstroms mit den betreffenden Gewichtungsfaktoren versehen und gewichtet werden.

Gemäß Fig. 2 bedeutet die Größe l die Nummer des Teilstromes und die Größe k die Nummer des übergeordneten Zellenstromes. Weiterhin werden jedem Zellenstrom zwei Gewichtungsfaktoren $r_k^l$ (l=1,2) zugewiesen. Die Zuweisung dieser Gewichtungsfaktoren läßt einen einzigen Zellenstrom wie zwei getrennte Zellenströme für den Scheduler S aussehen. Dabei werden die Gewichtungsfaktoren $r_k^l$ in der eben angegebenen Weise berechnet. Der Scheduler S legt die Reihenfolge fest, in der die Zellen weitergeleitet werden.

Weiterhin ist jedem der Teilströme eine Zählvorrichtung $S_k^l$ in Bezug auf seine Priorität zugeordnet, womit sich eine Matrix von Zählvorrichtungen ergibt. Derartige Zählvorrichtungen werden benutzt um die Differenz zwischen der Anzahl der Zellen, die in das System eingedrungen sind und der Anzahl der Zellen die das System über den Scheduler S für jeden Zellenstrom k und jede Priorität l verlassen haben, zu berechnen. Der Zählerstand der Zählvorrichtung $S_k^l$ wird um 1 inkrementiert, wenn eine Zelle des Zellenstromes k mit der Priorität l in das System eindringt.Der Zählerstand der Zählvorrichtung wird um 1 dekrementiert, wenn eine Zelle mit der Priorität l des Zellenstromes k vom Scheduler S weitergeleitet wird. Falls nun die Zählvorrichtung einen Wert größer 0 aufweist, bedeutet dies, daß die Anzahl der eingehenden Zellen größer ist als die Anzahl der vermittelten Zellen für diesen speziellen Teilstrom und diese speziell zugewiesene Priorität. Für diesen Fall können weitere Zellen derselben Priorität l desselben Zellenstromes k vom Scheduler S vermittelt werden. Falls jedoch die Zählvorrichtung einen Zählerstand von 0 aufweist, bedeutet dies, daß die Anzahl der eingehenden und abgehenden Zellen gleich ist; damit werden keine weiteren Zellen für diesen Teilstrom vom Scheduler S vermittelt. Die vom Scheduler S übertragenen Zellen müssen nicht die Priorität des dekrementierten Zählers haben.

Aus den vorstehend beschriebenen Zusammenhängen geht hervor, daß falls ein Zellenstrom nur "Priorität 1"- Zellen und die verbleibenden Zellenströme "Priorität 2"- Zellen aufweisen, dann die Zellenströme mit der höheren Priorität Vorrang in Bezug auf die Übertragung haben. Falls alle Zellenströme Zellen mit derselben Priorität aufweisen werden die aktiven Zellenströme behandelt als ob die Zellen keinerlei Priorität aufweisen würden. Falls Zellenströme zwei Prioritäten aufweisen, werden nur die Teilströme deren Zählvorrichtung $S_k^l > 0$ ist, gemäß dem zugewiesenen Gewichtungsfaktor $r_k^l$ behandelt. Teilströme, deren Zählvorrichtung $S_k^l = 0$, werden fast nur behandelt, wenn $S_k^l = 0$ für alle k. In diesem Fall wird jeder niedrigpriorisierte Zellenstrom k bezüglich seines Gewichtungsfaktors $r_k^l$ zurückgehalten.

## Patentansprüche

1. Verfahren zur Priorisierung von in Zellenströmen zu übertragenden Informationen,
   mit einer Mehrzahl (n) von Zellenströmen, die aus jeweils einer Vielzahl von Zellen gebildet sind und die über einen gemeinsamen Verbindungsabschnitt zu weiteren Übertragungseinrichtungen geleitet werden und denen gegebenenfalls unterschiedliche Gewichtungsfaktoren während des Übertragungsvorgangs zugewiesen sind,
   **dadurch gekennzeichnet,**
   **daß** die Unterschiede der einer ersten Mehrzahl der Zellenströme ($n_h$) zugewiesenen Gewichtungsfaktoren ($r_i$) zu den der verbleibenden Mehrzahl der Zellenströme ($n_1$) zugewiesenen Gewichtungsfaktoren ($r_i$) derart groß gewählt werden, daß dadurch eine effektive Priorisierung der Zellenströme erreicht wird.

2. Verfahren nach Anspruch 1,
   **dadurch gekennzeichnet,**
   **daß** die Zellenströme aus einer Vielzahl von Teilströmen gebildet sind, denen jeweils gegebenenfalls unterschiedliche Gewichtungsfaktoren ($r_i$,$r_j$) zugewiesen sind.

3. Verfahren nach Anspruch 2,
   **dadurch gekennzeichnet,**
   **daß** den Teilströmen eines Zellenstromes gegebenenfalls unterschiedliche Gewichtungsfaktoren ($r_k^l$) zugewiesen werden.

4. Verfahren nach Anspruch 2,
   **dadurch gekennzeichnet,**
   **daß** wenigstens eine Zählvorrichtung ($S_k^l$) pro Teilstrom und Priorität vorgesehen wird, deren Zählerstand beim Eintreffen einer Zelle des jeweiligen Teilstromes inkrementiert und beim Verlassen dekrementiert wird.

5. Verfahren nach einem der vorstehenden Ansprüche,
   **dadurch gekennzeichnet,**
   **daß** ein Scheduler (S) die Zellen nach Maßgabe der Auswertung der Zählvorrichtungen ($S_k^l$) weiterleitet.

## Claims

1. Method for prioritizing information to be transmitted in cell streams,
   having a quantity (n) of cell streams which are formed in each case from a plurality of cells and which are directed via a common connection section to further transmission devices and to which, if appropriate, different weighting factors are allocated during the transmission procedure, **characterized in that** the differences between the weighting factors ($r_i$) allocated to a first quantity of cell streams ($n_h$) and the remaining quantity of weighting factors ($r_i$) assigned to the cell streams ($n_i$) are chosen to be large with the weighting factors ($r_i$) allocated to the remaining quantity of cell streams ($n_1$), such that, as a result, an effective prioritization of the cell streams is achieved.

2. Method according to Claim 1, **characterized in that** the cell streams are formed from a plurality of substreams to which, if appropriate, different weighting factors ($r_i$, $r_j$) are allocated in each case.

3. Method according to Claim 2, **characterized in that**, if appropriate, different weighting factors ($r_k^l$) are allocated to the substreams of a cell stream.

4. Method according to Claim 2, **characterized in that** at least one counting device ($S_k^l$) per substream and priority is provided, the counter reading of which device is incremented when a cell of the respective substream arrives and is decremented when said cell leaves.

5. Method according to one of the preceding claims, **characterized in that** a scheduler (S) passes on the cells in accordance with the evaluation of the counting devices ($S_k^l$).

**Revendications**

1. Procédé de classement par ordre de priorité pour des informations devant être transmises dans des courants de cellules, avec une majeure partie (n) de courants de cellules formés respectivement par une pluralité de cellules et dirigés vers d'autres dispositifs de transmission à l'aide d'un élément de connexion commune, et auxquels sont attribués des facteurs de pondération éventuellement différents pendant l'opération de transmission,
**caractérisé en ce que**, à la différence des facteurs de pondération ($r_i$) attribués à une première majeure partie des courants de cellules ($n_h$) par rapport aux facteurs de pondération ($r_i$) attribués à la majeure partie restante des courants de cellules ($n_1$), ils sont sélectionnés de telle taille que l'on obtient ainsi un classement effectif par ordre de priorité des courants de cellules.

2. Procédé selon la revendication 1, **caractérisé en ce que** les courants de cellules sont formés par une pluralité de courants partiels, auxquels sont attribués respectivement des facteurs de pondération ($r_i$, $r_j$) éventuellement différents.

3. Procédé selon la revendication 2, **caractérisé en ce que** des facteurs de pondération ($r_k^1$) éventuellement différents sont attribués aux courants partiels d'un courant de cellule.

4. Procédé selon la revendication 2, **caractérisé en ce qu'**au moins un dispositif de comptage ($S_k^1$) est prévu par courant partiel et par priorité, dont le compteur est incrémenté lors de l'arrivée d'une cellule du courant partiel respectif et décrémenté lors de la sortie de cette cellule.

5. Procédé selon l'une quelconque des revendications précédentes,
**caractérisé en ce qu'**un programmateur (S) achemine les cellules conformément à l'exploitation des dispositifs de comptage ($S_k^1$).

**FIG 1**

**FIG 3**

# FIG 2